## Europäisches Patentamt

## European Patent Office

## Office européen des brevets

(19)

(11) Veröffentlichungsnummer: **0 140 195 B1**

(12) **EUROPÄISCHE PATENTSCHRIFT**

(45) Veröffentlichungstag der Patentschrift:
19.07.89

(21) Anmeldenummer: 84111785.6

(22) Anmeldetag: 03.10.84

(51) Int. Cl.⁴ : **B 62 D 53/08**

(54) Zugsattelzapfen für eine Sattelkupplung.

(30) Priorität: 28.10.83 CH 5845/83

(43) Veröffentlichungstag der Anmeldung:
08.05.85 Patentblatt 85/19

(45) Bekanntmachung des Hinweises auf die Patenterteilung: 19.07.89 Patentblatt 89/29

(84) Benannte Vertragsstaaten:
DE FR GB IT NL SE

(56) Entgegenhaltungen:
CH–A– 370 323
DE–C– 648 622

(73) Patentinhaber: GEORG FISCHER AKTIENGESELLSCHAFT
Mühlentalstrasse 105
CH-8201 Schaffhausen (CH)

(72) Erfinder: Jakob, Lothar
Schrotzburgstrasse 11
D-7702 Gottmadingen (DE)

Jouve, 18, rue St-Denis, 75001 Paris, France

## Beschreibung

Die vorliegende Erfindung betrifft einen Zugsattelzapfen für eine Sattelkupplung mit einem am Befestigungsflansch anschliessenden Zapfenkopf, wobei der Uebergang vom Zapfenkopf zum Befestigungsflansch eine Abrundung aufweist.

Bei den bekannten und handelsüblichen Ausführungsformen der Zugsattelzapfen, die mehrheitlich einheitliche Abmessungen aufweisen, ist der Uebergang vom Zapfenkopf zum Befestigungsflansch lediglich durch einen relativ kleinen Radius gebildet. Es hat sich gezeigt, dass der Uebergang vom Zapfenkopf zum Befestigungsflansch eine höchst beanspruchte Stelle ist, die im Bereich unfallähnlicher Ereignisse Beanspruchungskollektivspitzenwerte durchläuft, die grösste Sicherheitsanforderungen verlangt.

Aus der DE-Gbm Nr. 7 421 238 ist ein Zugsattelzapfen bekannt, der am Uebergang vom Zapfenkopf zum Befestigungsflansch einen umlaufenden, ein oder mehrstufig ausgebildeten Absatz aufweist.

Nachteilig an dieser Ausführung ist insbesondere der fertigungstechnische Aufwand. Denn die Mehrstufigkeit bedingt, wenn man die spanabhebende Bearbeitung an der oberen Stufe vermeiden will, eine unökonomisch grosse Gesenkaushebeschräge für den Rohling. Die Einsparung an Zerspanung bei der oberen Stufe der Verstärkungsbundes ist viel geringer als die Zunahme der Zerspanung unterhalb dieses Bereiches.

Aufgabe der vorliegenden Erfindung ist es, einen Zugsattelzapfen zu schaffen, welcher unter Beibehaltung der einheitlichen Abmessungen, an den gefährdeten Stellen den geforderten Belastungsproben mit ausreichender Sicherheit stand hält und die Grauzone der unfallähnlichen Fahrzustände mit berücksichtigt. Zudem soll durch Gewichtseinsparung und durch einfachere Bearbeitung ein Herstellungsvorteil erbracht werden.

Erfindungsgemäss wird diese Aufgabe durch die Lehre des kennzeichnenden Teiles des ersten Anspruches gelöst.

Weitere vorteilhafte Ausgestaltungen gehen aus den abhängigen Ansprüchen hervor.

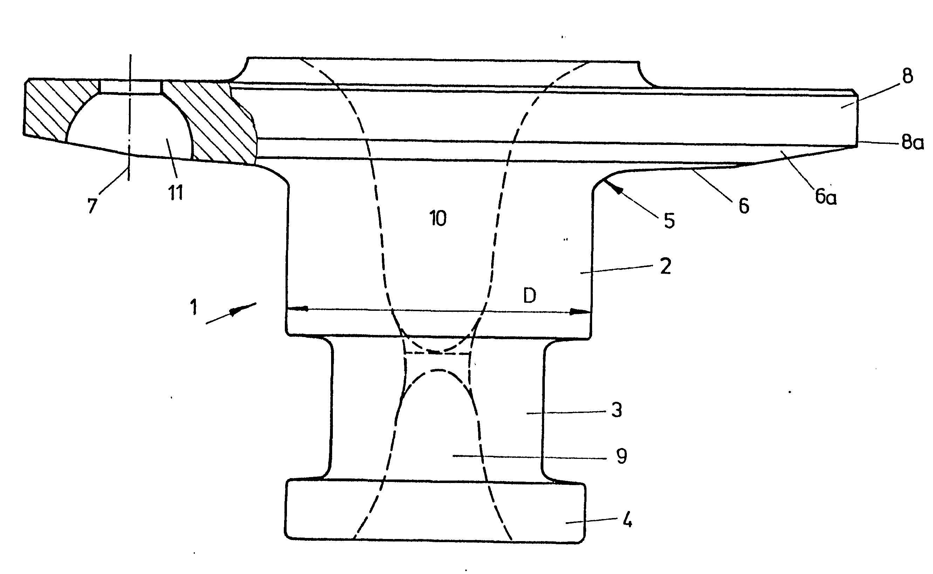

Anhand der beiliegenden Figur ist ein bevorzugtes Ausführungsbeispiel der Erfindung dargestellt.

Ein Zugsattelzapfen 1 weist einen Befestigungsflansch 8 mit einem Uebergangsbereich 6 zu einem Zapfenkopf 2, einem Mittelzapfen 3 und einem Zapfenfuss 4 auf.

Vom Zapfenkopf 2 zum Befestigungsflansch 8 ist ein umlaufender Absatz 6a vorgesehen, der bis zum Umfang 8a des Flansches 8 reicht. Der Uebergang 6 vom Absatz 6a zum Zapfenkopf 2 ist mit einer Abrundung 5 versehen, die einen Radius aufweist, der etwa 0,1 x dem Durchmesser D des Zapfenkopfes 2 entspricht. Der Auslauf 6 des Ueberganges 5 weist einen im wesentlichen parabelförmigen Verlauf auf. Dieser Auslauf reicht bis zum Bereich der Mittelachse 7 der Ausnehmung 11.

Um den Zapfen gewichtsmässig leichter und mit erhöhter Bauteilefestigkeit zu gestalten, sind im zylindrischen Zapfenteil, der im wesentlichen vom Zapfenkopf 2, vom Mittelzapfen 3 und vom Zapfenfuss 4 gebildet wird Ausnehmungen 9 und 10 vorgesehen, die tief in diesen Teil hinein ragen. Die Ausnehmungen können auch durchgehend ausgebildet sein. Diese Ausnehmungen haben einen runden Querschnitt und sind etwas tulpenförmig und sind im dargestellten Beispiel so angeordnet, dass die Querschnittsfläche von der Oberfläche gegen das Innere des zylindrischen Teiles abnimmt.

Der beschriebene Zugsattelzapfen ergibt ein leichteres Bauteil mit dem Vorteil der daran anknüpfenden wirtschaftlichen Einsparungen, mit gleichbleibenden Festigkeitswerten.

## Patentansprüche

1. Zugsattelzapfen für eine Sattelkupplung mit einem am Befestigungsflansch anschliessenden Zapfenkopf, wobei der Uebergang vom Zapfenkopf zum Befestigungsflansch eine Abrundung in der Art eines Kreisabschnittes aufweist, dadurch gekennzeichnet, dass der Kreisabschnitt befestigungsflanschseitig einen parabelförmigen Auslauf (6) aufweist, der bis zur Mittelachse (7) einer Ausnehmung (11) am Befestigungsflansch (8) reicht, und dass mindestens eine, weitgehend in einem vom Zapfenkopf (2) und vom Mittelzapfen (3) gebildeten zylindrischen Teil hineinragende Ausnehmung (9, 10) vorgesehen ist.

2. Zugsattelzapfen nach Anspruch 1, dadurch gekennzeichnet, dass je eine Ausnehmung (9, 10) vom Zapfenfuss (4) und vom Befestigungsflansch (8) her in den zylindrischen Teil hineinragen.

3. Zugsattelzapfen nach Anspruch 2, dadurch gekennzeichnet, dass die Querschnittsflächen der Ausnehmungen (9, 10) gegen das Innere des zylindrischen Teiles des Zapfens abnehmen.

## Claims

1. Kingpin for a saddle coupling with a pinhead joined to a fixing flange, in which the transition from the pinhead to the fixing flange has a curve in the nature of a circular section, characterised in that the circular section has a parabolic run-out on the side of the fixing flange, which run-out extends to the central axis (7) of a hole (11) in the fixing flange (8), and in that at least one recess (9, 10) is provided extending for the most part into a cylindrical section formed by the pinhead (2) and the centre pin (3).

2. Kingpin according to claim 1, characterised in that the recesses (9, 10) extend respectively from the pin foot (4) and from the fixing flange (8) into the cylindrical section.

3. Kingpin according to claim 2, characterised in that the cross-sectional areas of the recesses (9, 10) diminish towards the inner part of the cylindrical section.

## Revendications

1. Pivot d'accouplement pour une sellette d'attelage comportant une tête de pivot raccordée à la bride de fixation, dans laquelle la transition entre la tête de pivot et la bride de fixation présente un arrondi analogue à une partie circulaire, caractérisé en ce que la partie circulaire présente, du côté de la bride de fixation, un profil parabolique (6) qui s'étend jusqu'à l'axe central (7) d'un évidement (11) sur la bride de fixation (8) et en ce qu'il comporte au moins un évidement (9, 10) s'enfonçant profondément dans une partie cylindrique constituée de la tête de pivot (2) et du milieu de pivot (3).

2. Pivot d'accouplement selon la revendication 1, caractérisé en ce que chaque évidement (9, 10) s'enfonce dans la partie cylindrique, depuis le pied de pivot (4) et depuis la bride (8).

3. Pivot d'accouplement selon la revendication 2, caractérisé en ce que les surfaces des sections des évidements (9, 10) décroissent vers l'intérieur de la partie cylindrique du pivot.

EP 0 140 195 B1